# EUROPÄISCHE PATENTSCHRIFT

(11) **EP 1 972 304 B1**
(45) Veröffentlichungstag und Bekanntmachung des Hinweises auf die Patenterteilung: **19.05.2010**
(21) Anmeldenummer: 08004298.9
(22) Anmeldetag: 07.03.2008
(51) Int. Cl.: A61C 13/273, A61C 13/265

(54) **Zahnprothesenkupplungsvorrichtung**
Dental prostheses fastening device
Dispositif de couplage de prothèse dentaire

(30) Priorität: 23.03.2007 DE 102007014007
(43) Veröffentlichungstag der Anmeldung: 24.09.2008
(73) Patentinhaber: Gebr. Brasseler GmbH & Co. KG, D-32657 Lemgo (DE)
(72) Erfinder: Otto, Bernd, 32689 Kalletal (DE); Hagemann, Frank, 32657 Lemgo (DE); Groener, Oliver, 59514 Welver (DE)
(74) Vertreter: Weber, Joachim

(56) Entgegenhaltungen:
- EP-A- 0 298 286
- EP-A- 1 021 999
- DE-A1- 19 901 529
- DE-B- 1 062 885

## Beschreibung

Die Erfindung bezieht sich auf eine Zahnprothesenkupplungsvorrichtung nach dem Oberbegriff des Anspruches 1.

Im Einzelnen bezieht sich die Erfindung auf eine Zahnprothesenkupplungsvorrichtung zur lösbaren Schnellverbindung einer Zahnprothese mit zumindest einem an einem Dentalimplantat befestigten Verbindungselement.

Zur Fixierung von herausnehmbaren Zahnprothesen ist es bekannt, Implantate im Kiefer des Patienten zu verankern und mittels dieser Implantate die Zahnprothese zu fixieren. Hierbei kommen im Stand der Technik Magnet- oder O-Ring-Attachments zum Einsatz. Eine weitere Ausgestaltung bilden sogenannte Druckknopf-Attachments, bei welchen das Dentalimplantat mit einem Kopfbereich versehen ist, der einen daran anschließenden, hinterschnittenen Halsbereich umfasst. Auf den Kopfbereich kann somit eine Zahnprothesenkupplungsvorrichtung aufgedrückt werden.

Erfindungsgemäß sind somit zwei Verankerungselemente vorgesehen, zum einen der Primäranker, welcher mit im Dentalimplantat des Patienten verschraubt wird. Weiterhin ist als Gegenstück die Zahnprothesenkupplungsvorrichtung vorgesehen (Sekundäranker), die mit der Zahnprothese verbunden wird. Dies erfolgt üblicherweise durch Einpolymerisieren.

Beim Reponieren oder Einsetzen der Prothese verrasten somit die Zahnprothesenkupplungsvorrichtungen (Sekundäranker) mit den Primärankern. Auf diese Weise wird die Prothese sicher im Mund des Patienten fixiert bzw. gehalten.

Durch das häufige Entnehmen der Prothese, beispielsweise während des Schlafs oder zum Reinigen derselben, werden die Zahnprothesenkupplungsvorrichtungen von den Primärankern gelöst.

Dies führt zu einer mechanischen Belastung der Zahnprothesenkupplungsvorrichtungen, so dass diese nach bestimmten Zeitintervallen erneuert werden müssen. Dies geschieht durch den Zahnarzt oder Zahntechniker.

Die Primäranker, die auf den Dentalimplantaten verschraubt sind, verbleiben im Kiefer des Patienten. Durch die häufige Reponierung der Prothesen ergibt sich jedoch ein nicht unerheblicher Verschleiß, beispielsweise des kugelförmigen Kopfbereichs, so dass dann ein Verlust der Friktion beim Einsetzen der Zahnprothesenkupplungsvorrichtung festzustellen ist und die Prothese nicht mehr sicher gehalten werden kann. In diesen Fällen ist es erforderlich, den Primäranker zu ersetzen. Dies bedeutet für den Patienten einen erheblichen Aufwand.

Weiterhin ist es erforderlich, den Kappenteil der Zahnprothesenkupplungsvorrichtung auszuwechseln. Da dieser üblicherweise eingerastet, einpolymerisiert oder in anderer Weise fest verbunden ist, muss mittels mechanischer Werkzeuge, beispielsweise Bohrer oder Fräser, das Verschleißteil entfernt werden. Als Alternative muss die gesamte Zahnprothesenkupplungsvorrichtung aus der Zahnprothese entfernt und durch eine neue ersetzt werden. Beide Vorgänge sind arbeitsintensiv und fehlerbehaftet und führen zu nicht unerheblichen Kosten.

Als weiterer Nachteil ergibt sich, dass bei der Reponierung der Prothese im Mund des Patienten deren ideale Position vielfach nicht exakt eingehalten wird. Bei einem Zubeißen durch den Patienten wird die Prothese auf den Primäranker aufgepresst. Dieses Aufpressen erfolgt zwischen dem Primäranker und dem metallischen Rand der Zahnprothesenkupplungsvorrichtung (Sekundäranker). Hierdurch erfolgt eine spanende Belastung des Kopfbereiches des Primärankers, welcher üblicherweise aus Titan oder einer Titanlegierung besteht. Die dabei abgeschabten Späne werden in die Zahnprothesenkupplungsvorrichtung und dabei insbesondere in die elastische, napfartige Kappe aus Kunststoff verbracht. Durch die ständig ausgeführten Mahl- und Kaubewegungen mit der Prothese wirken diese Späne dann abrasiv und sorgen für eine starke Abnutzung am Kopfbereich des Primärankers. Durch den hierbei hervorgerufenen Friktionsverlust ist es bereits nach relativ kurzer Tragezeit erforderlich, die Primäranker und die Sekundäranker auszutauschen. Auch dies ist für den Patienten kostenintensiv und unangenehm und gestaltet sich für den Zahnarzt als schwierig und aufwendig. Der Primäranker muss aus dem Implantat geschraubt und durch ein neues ersetzt werden. Die Kunststoffkappe der Zahnprothesenkupplungsvorrichtung (Sekundäranker) muss durch Ausbohren aus dem Sekundärankergehäuse entfernt werden. Dabei besteht die Gefahr, dass der Sekundäranker beschädigt wird. Dies bedingt eine komplette Entfernung und neue zahnärztliche/zahntechnische Einarbeitung.

Zur Fixierung einer Zahnprothese aus Elastomere zeigt die US 5, 678, 993 zwei Implantate, welche jeweils einen Kugelförmigen Kopf mit Halsbereich umfasst.

Als nächstkommender Stand der Technik kann beispielsweise auf die DE 199 01529 verwiesen werden, die der Oberbegriff des Anspruchs 1 offenbart.

Die DE 692 04 103 T2 zeigt eine Titanhülse, in welcher eine verformbare Masse zur Verankerung eines Kopfbereiches eines Primärankers mittels eines zum Auswechseln der verformbaren Masse zu zerstörenden Ringes gehalten ist.

Der Erfindung liegt die Aufgabe zugrunde, eine Zahnprothesenkupplungsvorrichtung der eingangs genannten Art zu schaffen, welche bei einfachem Aufbau und einfacher, kostengünstiger Herstellbarkeit die Nachteile des Standes der Technik vermeidet und eine einfache Austauschbarkeit vorsieht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Kappe der Kupplungsvorrichtung in einer Ausnehmung eines Halteelements gelagert ist, welches aus Kunststoff gefertigt, napfartig ausgebildet und an seiner äußeren Mantelfläche mit einem Gewinde versehen ist. Somit ist es auf besonders einfache Weise möglich, das Halteelement herauszuschrauben und zusammen mit der Kappe zu ersetzen. Hierfür werden keine speziellen Kenntnisse oder handwerkliche Fähigkeiten verlangt. Das Auswechseln kann schnell und einfach durch einen Zahnarzt oder durch Hilfskräfte vorgenommen werden.

Als besonders vorteilhaft erweist es sich dabei, dass das Halteelement angrenzend an die Ausnehmung mit einem nach außen weisenden, über die Mantelfläche des Gewindes überstehenden Protektorrand versehen wird. Dieser Protektorrand dient zum Einführen des Kopfbereichs des Primärankers und verhindert, dass der Kopfbereich mit metallischen Komponenten des Sekundärankers in Kontakt kommt. Eine mechanische Abnutzung durch metallische Spanbildung ist somit gänzlich auszuschließen.

Besonders vorteilhaft ist es, wenn der Protektorrand konisch oder trichterartig zur Ausnehmung verlaufend ausgebildet ist. Hierdurch wird auch bei nicht korrektem Einsetzen der Prothese sichergestellt, dass diese mit dem Primäranker verrastet.

Zum Ausschrauben bzw. Einschrauben des erfindungsgemäß vorgesehenen Halteelements erweist es sich als besonders vorteilhaft, wenn dieses mit formschlüssigen WerkzeugEingriffsmitteln versehen ist. So ist es beispielsweise möglich, Schlitze oder Ähnliches zum Ansetzen eines Schraubendrehers oder eines ähnlichen Werkzeuges vorzusehen.

Die Kappe ist erfindungsgemäß bevorzugterweise entweder in das Halteelement eingepresst oder mit diesem (durch einen Hinterschnitt oder Ähnliches) verrastet. Es ist erfindungsgemäß auch möglich, die Kappe mit dem Halteelement mittels eines Fügeverfahrens zu verbinden, beispielsweise zu verkleben. Die Kappe kann auch einstückig mit dem Halteelement ausgebildet sein.

Sofern das Halteelement direkt mit dem Material einer Zahnprothese verbunden werden soll, ist es günstig, wenn das Halteelement mit einer polymerisationsverhindernden Isolierschicht versehen ist. Die Isolierschicht kann als Isolierflüssigkeit aufgebracht werden, sie kann beispielsweise aus Ethanol mit Calciumchlorid-2-hydrat bestehen. Beim Einpolymerisieren erfolgt somit keine Verbindung des Halteelements mit dem Material der Prothese, so dass das Halteelement aus dieser einfach ausgeschraubt werden kann.

Weiterhin ist es erfindungsgemäß besonders günstig, wenn das Halteelement in ein metallisches Verankerungselement einschraubbar ist, welches mit einem Innengewinde im Bereich einer Innenausnehmung versehen ist. Das Verankerungselement kann dann mit dem Material der Zahnprothese verbunden werden, beispielsweise durch Polymerisation. Das Halteelement selbst kann in das Verankerungselement eingeschraubt bzw. aus diesem ausgeschraubt werden, um es zu ersetzen. Dabei ist es besonders günstig, dass der Protektorrand das Verankerungselement, welches üblicherweise aus einem metallischen Werkstoff besteht, überdeckt, so dass keinerlei metallischer Kontakt zwischen dem Kopfbereich des Primärankers und dem Verankerungselement möglich ist.

Erfindungsgemäß ist somit vorgesehen, dass der Rand des Sekundärankers, nämlich der Protektorrand des Halteelements, nicht aus Metall gefertigt ist, sondern aus einem Kunststoff besteht. Ein metallischer Abrieb, der zu einer Beeinträchtigung der Funktionsfähigkeit führen könnte, wird somit vollständig ausgeschlossen.

Das Gewinde des Halteelements kann ein metrisches Fein- oder Regelgewinde sein, es ist jedoch auch ein Trapez-, Rund- oder Rohrgewinde möglich.

Der trichterförmig oder konisch verlaufende Protektorrand kann am Umfang eine Stärke von 0,2 bis 1 mm aufweisen.

Zur Befestigung der Kappe an dem Halteelement kann diese; wie erwähnt, mittels eines Hinterschnitts eingepresst oder verankert werden. Es ist jedoch auch möglich, an der Kappe ein Gewinde vorzusehen und diese in die Ausnehmung des Halteelements einzuschrauben.

Erfindungsgemäß kann das Halteelement, welches einstückig mit einem Protektorrand ausgeführt ist, aus folgenden Werkstoffen gefertigt sein:
- PEEK: Polyetheretherketon,
- POM: Polyoxymethylen,
- PP: Polypropylen,
- PE: Polyethylen,
- PSU: Polysulfon,
- PE-HMW: Polyethylen - hohes Molekulargewicht,
- PE-UHMW: Polyethylen - ultrahohes Molekulargewicht,
- mit Silberionen durchsetzter Kunststoff, antibakterieller Wirkung,
- mit Silberionen beschichtet.

Im Folgenden wird die Erfindung anhand eines Ausführungsbeispiels in Verbindung mit der Zeichnung beschrieben. Dabei zeigt:
- Fig. 1: eine schematische Darstellung eines Unterkieferbereichs eines Patienten sowie einer Zahnprothese mit Zahnprothesenkupplungsvorrichtungen (Stand der Technik),
- Fig. 2: eine Darstellung eines Ausführungsbeispiels des erfindungsgemäßen Halteelements,
- Fig. 3: eine rückseitige Ansicht des in Fig. 2 gezeigten Halteelements,
- Fig. 4: eine Explosionsansicht eines Ausführungsbeispiels der erfindungsgemäßen Zahnprothesenkupplungsvorrichtung,
- Fig. 5: eine perspektivische Ansicht eines Halteelements ohne Kappe und eines Verankerungselements, und
- Fig. 6: eine Gesamtansicht des Ausführungsbeispiels gemäß Fig. 4 mit Kappe.

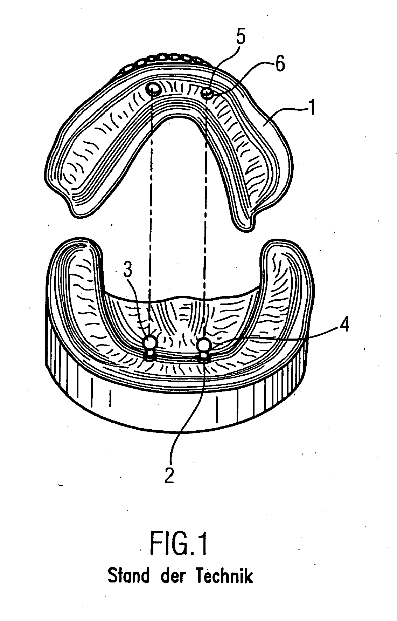

Fig. 1 zeigt in schematischer Darstellung einen zahnlosen Unterkieferabdruck 14 eines Patienten, in welchem zur Fixierung einer Zahnprothese 1 zwei Dentalimplantate mit aufgeschraubten Primärankern 2 eingebracht sind, welche jeweils einen kugelkopfförmigen Kopfbereich 3 umfassen, der an einem hinterschnittenen Halsbereich 4 gelagert ist.

Die Zahnprothese 1 weist (schematisch dargestellt) zugehörige Ausnehmungen 5 von Kappen 6 auf. Aus der Fig. 1 ergibt sich die Zuordnung der Zahnprothese 1 zu einem Unterkiefer eines Patienten.

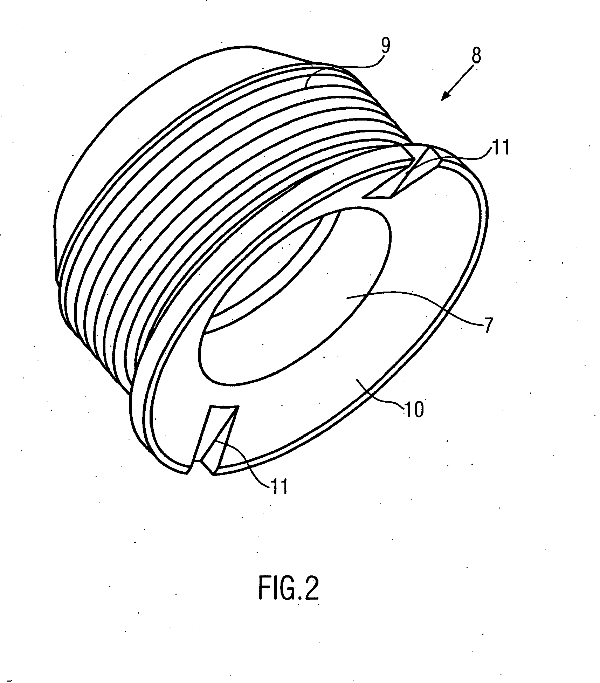

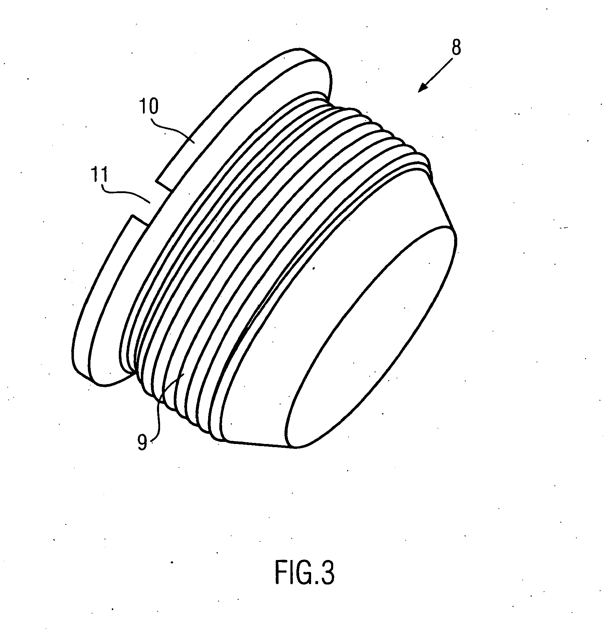

Fig. 2 und 3 zeigen in perspektivischer Ansicht jeweils ein Ausführungsbeispiel eines erfindungsgemäßen Halteelements 8, welches aus Kunststoff gefertigt ist und eine zentrische Ausnehmung 7 umfasst, an welche angrenzend ein trichterförmiger oder konischer Protektorrand 10 ausgebildet ist. Dieser weist einen deutlich größeren Durchmesser auf, als ein zylindrischer Hauptkörper des napfartig ausgebildeten Halteelements 8, welcher mit einem Außengewinde 9 versehen ist. An dem Protektorrand 10 sind Werkzeugeingriffsmittel 11 in Form von Schlitzen oder Bohrungen vorgesehen, um das Halteelement 8 in ein Gewinde einzuschrauben bzw. um dieses auszuschrauben.

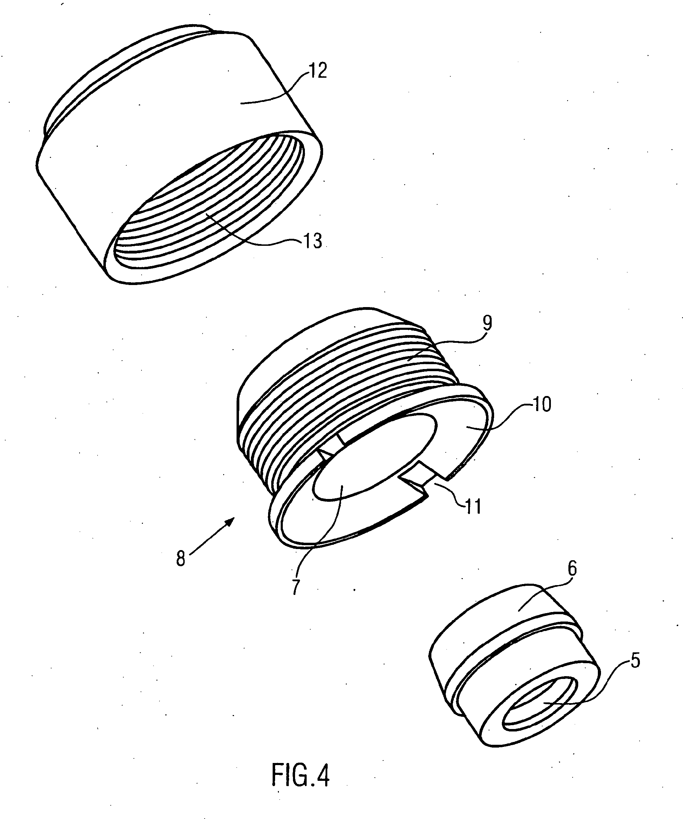

Fig. 4 zeigt in perspektivischer Darstellung das Halteelement 8 mit einer zugehörigen Kunststoffkappe 6, welche mit einer Ausnehmung 5 versehen ist, in welche der Kopfbereich 3 des Primärankers 2 lösbar einrastbar und verschnappbar ist, ähnlich einem Druckknopf. Die Kappe 6 ist an ihrem Außenumfang konturiert bzw. mit einer Wulst versehen und wird in die Ausnehmung 7 des Halteelements 8 eingepresst. Hierdurch kann eine mechanische Verankerung erfolgen. Es ist jedoch auch möglich, die Kappe 6 so zu dimensionieren, dass diese lediglich durch die Einpresskraft in der Ausnehmung 7 gehalten wird.

Fig. 4 zeigt weiterhin ein napfartiges Verankerungselement 12, welches mit einem Innengewinde 13 versehen ist. Das Verankerungselement 12 ist bevorzugterweise aus Titan oder einer Titanlegierung gefertigt und kann direkt mit der Zahnprothese 1 verbunden werden, beispielsweise durch Polymerisation oder mittels eines geeigneten Fügeverfahrens.

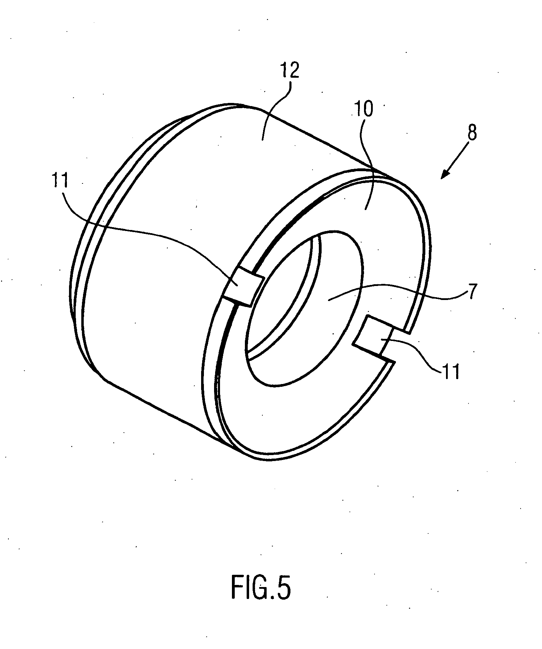

In das Verankerungselement 12 ist das erfindungsgemäße Halteelement 8 lösbar einschraubbar, so wie dies in Fig. 5 gezeigt ist.

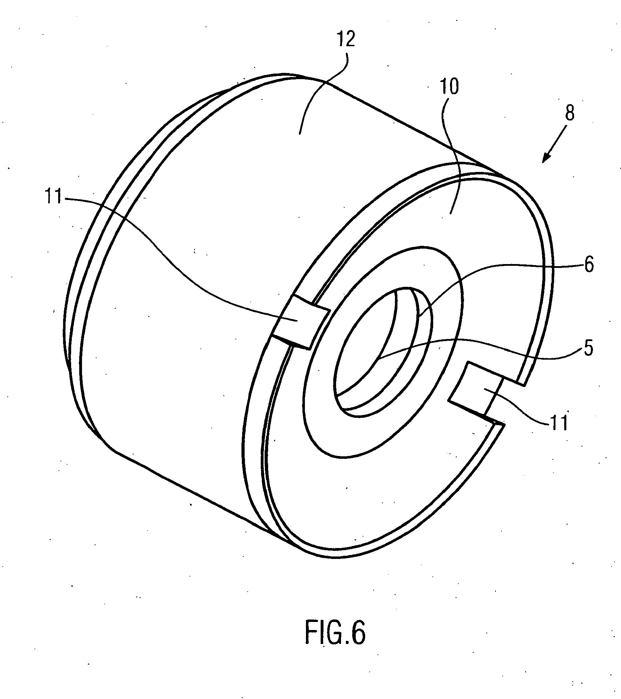

Fig. 6 zeigt den fertig montierten Zustand mit eingesetzter Kappe 6.

Erfindungsgemäß ist es somit auf besonders einfache Weise möglich, die Kappe 6 bei Verschleiß auszuwechseln, nämlich durch Ausschrauben des Halteelements 8. Hierbei werden Beschädigungen des Verankerungselements 12 vermieden. Weiterhin ist es nicht erforderlich, spanende oder andere mechanische Arbeitsverfahren einzusetzen. Das Auswechseln kann somit in einfachster Weise ohne Fachkenntnisse auch durch Hilfspersonal erfolgen.

Durch die Ausgestaltung und Dimensionierung des Protektorrands 10 wird das metallische Verankerungselement 12 vollständig abgedeckt, so wie dies aus den Fig. 5 und 6 ersichtlich ist. Bei einem Reponieren der Zahnprothese 1 wird somit vollständig ausgeschlossen, dass der Kopfbereich 3 des Primärankers mit dem Verankerungselement 12, welches einen Teil eines Sekundärankers bildet, in Kontakt kommt und spanbildende Verschleißerscheinungen auftreten.

Alternativ zu der Verwendung des Verankerungselements 12 ist es auch möglich, dass Halteelement 8 direkt in das Material der Zahnprothese 1 einzuschrauben.

### Bezugszeichenliste

- 1: Zahnprothese
- 2: Primäranker
- 3: Kopfbereich
- 4: Halsbereich
- 5: Ausnehmung
- 6: Kappe
- 7: Ausnehmung
- 8: Halteelement
- 9: Gewinde
- 10: Protektorrand
- 11: Werkzeugeingriffsmittel
- 12: Verankerungselement
- 13: Innengewinde
- 14: Unterkieferabdruck

## Patentansprüche

1. Zahnprothesenkupplungsvorrichtung zur lösbaren Schnellverbindung einer Zahnprothese (1) mit zumindest einem an einem Primäranker (2) befestigten Verbindungselement, welches einen Kopfbereich (3) und einen daran anschließenden, hinterschnittenen Halsbereich (4) umfasst, wobei die Kupplungsvorrichtung eine mit einer Ausnehmung (5) zur Einbringung, des Kopfbereichs (3) versehene napfartige Kappe (6) umfasst, wobei die Kappe (6) in einer Ausnehmung (7) eines Halteelements (8) gelagert ist, welches napfartig ausgebildet ist und an seiner äußeren Mantelfläche mit einem Gewinde (9) versehen ist,
**dadurch gekennzeichnet,**
**dass** das Halteelement (8), aus Kunststoff gefertigt ist, dass die napfartige Kappe (6) aus einem elastischen Material gefertigt ist, und
**dass** das Halteelement (8) angrenzend an die Ausnehmung (7) mit einem nach außen weisenden, über die Mantelfläche des Gewindes (9) überstehenden Protektorrand (10) versehen ist.

2. Zahnprothesenkupplungsvorrichtung nach Anspruch 1, **dadurch gekennzeichnet, dass** der Protektorrand (10) konisch zur Ausnehmung (7) verlaufend ausgebildet ist.

3. Zahnprothesenkupplungsvorrichtung nach Anspruch 1 oder 2, **dadurch gekennzeichnet, dass** der Protektorrand (10) trichterartig zur Mantelfläche des Gewindes (9) ausgebildet ist.

4. Zahnprothesenkupplungsvorrichtung nach einem der Ansprüche 1 bis 3, **dadurch gekennzeichnet, dass** der Protektorrand (10) mit formschlüssigen Werkzeugeingriffsmitteln (11) versehen ist.

5. Zahnprothesenkupplungsvorrichtung nach einem der Ansprüche 1 bis 4, **dadurch gekennzeichnet, dass** die Kappe (6) in das Halteelement (8) eingepresst ist.

6. Zahnprothesenkupplungsvorrichtung nach einem der Ansprüche 1 bis 4, **dadurch gekennzeichnet, dass** die Kappe (6) mit dem Halteelement (8) mittels eines Fügeverfahrens verbunden ist.

7. Zahnprothesenkupplungsvorrichtung nach einem der Ansprüche 1 bis 4, **dadurch gekennzeichnet, dass** die Kappe (6) mit dem Halteelement (8) einstückig ausgebildet ist.

8. Zahnprothesenkupplungsvorrichtung nach einem der Ansprüche 1 bis 7, **dadurch gekennzeichnet, dass** die Außenkontur des Halteelements (8) mit einer polymerisationsverhindernden Isolierschicht versehen ist.

9. Zahnprothesenkupplungsvorrichtung nach einem der Ansprüche 1 bis 8, **dadurch gekennzeichnet, dass** das Außengewinde (9) direkt mit der Zahnprothese (1) lösbar verbunden ist.

10. Zahnprothesenkupplungsvorrichtung nach einem der Ansprüche 1 bis 7, **dadurch gekennzeichnet, dass** das Halteelement (8) in ein metallisches Verankerungselement (12), welches eine mit einem Innengewinde (13) versehene Innenausnehmung umfasst, lösbar einschraubbar ist, wobei der Protektorrand (10) das Verankerungselement (12) überdeckt.

11. Zahnprothesenkupplungsvorrichtung nach einem der Ansprüche 1 bis 10, **dadurch gekennzeichnet, dass** diese mit einer Zahnprothese (1) verbindbar ist.

## Claims

1. A dental prostheses fastening device for a detachable quick connection of a dental prosthesis (1) to at least one connecting member attached at a primary anchor (2), comprising a head portion (3) and an adjacent undercut neck portion (4), the fastening device comprising a bowl-type cap (6) provided with a recess (5) for inserting the head portion (3), wherein the cap (6) is supported in a recess (7) of a retaining member (8) which is shaped as a bowl and provided with a thread (9) at its outer shell,
**characterized in that**
the retaining member (8) is made of plastics, that the bowl-type cap (6) is made of an elastic material, and that the retaining member (8), adjacent to the recess (7), is provided with a protector edge (10) facing outwardly and protruding beyond the shell of the thread (9).

2. The dental prostheses fastening device of claim 1, **characterized in that** the protector edge (10) is formed conically toward the recess (7).

3. The dental prostheses fastening device of claim 1 or 2, **characterized in that** the protector edge (10) is formed funnel-shaped toward the shell of the thread (9).

4. The dental prostheses fastening device of one of claims 1 to 3, **characterized in that** the protector edge (10) is provided with form-fit tool engaging means (11).

5. The dental prostheses fastening device of one of claims 1 to 4, **characterized in that** the cap (6) is pressed into the retaining member (8).

6. The dental prostheses fastening device of one of claims 1 to 4, **characterized in that** the cap (6) is connected to the retaining member (8) by means of a joining process.

7. The dental prostheses fastening device of one of claims 1 to 4, **characterized in that** the cap (6) is formed integrally with the retaining member (8).

8. The dental prostheses fastening device of one of claims 1 to 7, **characterized in that** the outer contour of the retaining member (8) is provided with an insulating layer preventing polymerisation.

9. The dental prostheses fastening device of one of claims 1 to 8, **characterized in that** the external thread (9) is directly and detachably connected to the dental prosthesis (1).

10. The dental prostheses fastening device of one of claims 1 to 7, **characterized in that** the retaining member (8) can be screwed-in detachably into a metal anchor member (12) which comprises an internal recess provided with an internal thread (13), wherein the protector edge (10) covers the anchor member (12).

11. The dental prostheses fastening device of one of claims 1 to 10, **characterized in that** same can be connected to a dental prosthesis (11).

## Revendications

1. Dispositif de couplage de prothèse dentaire pour une liaison rapide amovible d'une prothèse dentaire (1) avec au moins un élément de liaison fixé sur un ancrage primaire (2) qui comprend une zone de tête (3) et une zone de collet (4) contredépouillée et raccordée à la zone de tête, le dispositif de couplage comprenant une calotte (6) en forme de godet pourvue d'un évidement (5) servant à introduire la zone de tête (3), la calotte étant logée dans un évidement (7) d'un élément de retenue (8), lequel est conçu en forme de godet et est doté sur sa surface extérieure d'un filetage (9),
**caractérisé en ce que** l'élément de retenue (8) est fabriqué en plastique, **en ce que** la calotte en forme de godet (6) est conçue à partir d'un matériau élastique, et **en ce que** l'élément de retenue (8) adjacent à l'évidement (7) est doté d'un bord de renforcement (10) disposé vers l'extérieur, faisant saillie au-delà de la surface du filetage (9).

2. Dispositif de couplage de prothèse dentaire selon la revendication 1, **caractérisé en ce que** le bord de renforcement (10) est conçu de façon à entourer de façon conique l'évidement (7).

3. Dispositif de couplage de prothèse dentaire selon la revendication 1 ou 2, **caractérisé en ce que** le bord de renforcement (10) est conçu en forme d'entonnoir par rapport à la surface du filetage (9).

4. Dispositif de couplage de prothèse dentaire selon l'une des revendications 1 à 3, **caractérisé en ce que** le bord de renforcement (10) est doté de dispositifs mécaniques de prise d'outil (11).

5. Dispositif de couplage de prothèse dentaire selon l'une des revendications 1 à 4, **caractérisé en ce que** la calotte (6) est enfoncée dans l'élément de retenue (8).

6. Dispositif de couplage de prothèse dentaire selon l'une des revendications 1 à 4, **caractérisé en ce que** la calotte (6) est reliée à l'élément de retenue (8) au moyen d'un procédé d'assemblage.

7. Dispositif de couplage de prothèse dentaire selon l'une des revendications 1 à 4, **caractérisé en ce que** la calotte (6) est conçue d'un seul tenant avec l'élément de retenue (8).

8. Dispositif de couplage de prothèse dentaire selon l'une des revendications 1 à 7, **caractérisé en ce que** le contour extérieur de l'élément de retenue (8) est doté d'une couche isolante prévenant la polymérisation.

9. Dispositif de couplage de prothèse dentaire selon l'une des revendications 1 à 8, **caractérisé en ce que** le filetage extérieur (9) est directement relié de manière amovible à la prothèse dentaire (1).

10. Dispositif de couplage de prothèse dentaire selon l'une des revendications 1 à 7, **caractérisé en ce que** l'élément de retenue (8) est vissé de manière amovible dans un élément d'ancrage métallique (12) qui comprend un évidement interne doté d'un filetage interne (13), le bord de renforcement (10) recouvrant l'élément d'ancrage (12).

11. Dispositif de couplage de prothèse dentaire selon l'une des revendications 1 à 10, **caractérisé en ce que** celui-ci peut-être combiné à une prothèse dentaire (1).
